# EUROPEAN PATENT SPECIFICATION

(11) **EP 2 459 374 B1**
(45) Date of publication and mention of the grant of the patent: **21.12.2022**
(21) Application number: 10742463.2
(22) Date of filing: 02.08.2010
(51) Int. Cl.: B32B 7/12, B32B 25/06, B32B 25/08, B32B 27/08, B32B 27/30, B32B 27/34, B32B 27/10, B32B 27/18, B32B 27/20, B32B 27/32

(54) **LAMINATE STRUCTURES**
LAMINATSTRUKTUREN
STRUCTURES STRATIFIÉES

(30) Priority: 31.07.2009 GB 0913378
(43) Date of publication of application: 06.06.2012
(73) Proprietor: ELOPAK SYSTEMS AG, 8152 Glattbrugg (CH)
(72) Inventor: BLOK, Robert Jakob, NL-1251 AZ Laren (NH) (NL)
(74) Representative: Stevens Hewlett & Perkins
(86) International application number: PCT/EP2010/061226
(87) International publication number: WO 2011/012728

(56) References cited:
- EP-A1- 0 562 493
- EP-A1- 2 199 077
- WO-A1-00/32393
- US-A1- 2004 157 077
- US-A1- 2008 063 845

## Description

This invention relates to laminate structures.

According to a first aspect of the present invention, there is provided a laminate structure comprising, from the outside to the inside, a paperboard substrate with a weight of 200 to 650 g/m², an oxygen barrier layer, and a polymer layer comprising a blend of 50-89% by weight polyolefin, 10-50% by weight plastomer and 1 -10% by weight antiblocking agent.

Owing to this aspect of the invention, it is possible to provide a laminate structure with a polymer layer that is a sealing layer with improved seal strength, with improved hot tack properties, with a lower sealing initiation temperature and with a lower co-efficient of friction. These advantages all provide greater sealing integrity and therefore provide less leakage through micro-channels from a package constructed from the laminate structure. The plastomer provides the improved seal strength, the improved hot tack properties and the lower sealing initiation temperature. The anti-blocking agent is responsible for the lower co-efficient of friction.

Preferably, the polymer layer comprises the innermost layer of the laminate structure. The laminate structure can further comprise an additional polymer layer comprising a blend of 50-89% by weight polyolefin, 10-50% by weight plastomer and 1 -10% by weight anti-blocking agent, on the opposite side of the substrate from the oxygen barrier layer. Preferably, the additional polymer layer comprises the outermost layer of the laminate structure. In one embodiment, the polymer layer and the additional polymer layer are substantially identical in composition.

In a second embodiment, the anti-blocking agent by weight of the blend of the additional polymer layer is greater then the anti-blocking agent by weight of the blend of the polymer layer. The difference in weight in the anti-blocking agent between the two polymer layers supports the fine tuning of the co-efficient of friction properties of the inner and outermost surfaces of the laminate structure to best suit the processing equipment such as the filling and sealing machines.

Advantageously, the anti-blocking agent comprises calcium carbonate. The use of calcium carbonate provides better thermal conductivity of the polymer layer, which results in a better ability of the sealing layer to flow into cavities during sealing. Additionally, the presence of the calcium carbonate also assists with the provision a lower co-efficient of friction for the polymer layer. Calcium carbonate also reduces the cost of the laminate structure. Ideally, the polyolefin comprises LDPE, HDPE or polypropylene.

According to a second embodiment of the present invention, there is provided a laminate structure comprising, from the outside to the inside, the substrate, a polypropylene layer comprising a blend of polypropylene and a plastomer, the oxygen barrier layer, and the polymer layer.

Owing to this embodiment of the invention, it is possible to provide a laminate structure that has a polypropylene layer with a better flex crack resistance and pinhole resistance. In addition the modified polypropylene layer has better adhesive properties to the adjacent laminate layers. The addition of the plastomer to the polypropylene layer provides these advantages. The better flex crack resistance and pinhole resistance provide a lower effective water vapour transmission rate from a package constructed from the laminate structure, which results in less package bulging and less weight loss from a liquid food product within the package. The use of polypropylene in the laminate structure provides more structural integrity to the final package, which could be used, for example, to reduce the thickness of the substrate such as paperboard.

In one embodiment, the polypropylene layer is attached directly to the substrate. Polypropylene has a relatively high melting point temperature, which further enhances the pinhole resistance of the laminate structure. This is particularly relevant in filling and sealing systems that use gas burners to heat the laminate structure prior to sealing. The high melt point of the polypropylene is not sufficient alone to provide this advantage; the adhesion of the polypropylene layer directly to the substrate supports the polypropylene layer and discourages rupturing of the layer, so that an irregularly sized flame of the gas burner does not penetrate the polypropylene layer.

In a further embodiment, the laminate structure further comprises a tie layer between the polypropylene layer and the substrate. The use of the tie layer provides better adhesion of the polypropylene layer to the substrate. The laminate structure can further comprise a second tie layer between the polypropylene layer and the oxygen barrier layer. Again, the additional tie layer provides better adhesion of the polypropylene layer to the oxygen barrier layer. Each tie layer can comprise a ethylene (meth)acrylic acid copolymer or other acid polymer.

Advantageously, the polypropylene layer comprises 60-90% by weight of polypropylene and 10-40% by weight of plastomer. A plastomer is a polyeolefin with densities of between .865 g/cm³ and .905 g/cm³. The plastomer can be a C2-C8 metallocene catalysed LLDPE co-polymer. In a further modification of the blend, the polypropylene layer comprises a blend of polypropylene, a plastomer and LDPE. In this case, the polypropylene layer comprises 10-40% by weight of LDPE. The total weight % of the modification provided by the plastomer and the LDPE should preferably not exceed 40% of the total weight % of the polypropylene layer. The addition of the LDPE provides a supporting function in the polypropylene layer, thereby enhancing the melt strength of the layer and also further improves the flex crack resistance of the layer.

The oxygen barrier layer may be provided which comprises a blend of 70-90% by weight high-barrier resin and 10-30% by weight an aliphatic nylon. In this way, it is possible to provide a laminate structure in which the oxygen barrier layer is provided with relatively good flex crack resistance and, with heating, a reduced amount of micro-hole formation in the gas barrier layer. This therefore effectively increases the gas-barrier functionality of the overall laminate structure. For example, the high-barrier resin may be a semi- crystalline aromatic nylon. In this case, the modification additionally results in a laminate structure that has improved processing properties. When the laminate is being extruded, there is less extruder surging in the extruder pumping the molten barrier resin. This improves barrier layer thickness uniformity in the machine direction and the ultimate laminate therefore has more consistent gas barrier properties.

Embodiments of the present invention will now be described, by way of example only, with reference to the accompanying drawings, in which:-
Figure 1 is a schematic cross-section of a laminate structure,
Figures 2 to 5 are schematic cross-sections of further embodiments of the laminate structure,
Figure 6 is a schematic plan view of a blank formed from the laminate structure of any one of Figures 1 to 5, and
Figure 7 is a schematic perspective view of a package formed from the blank of Figure 6.

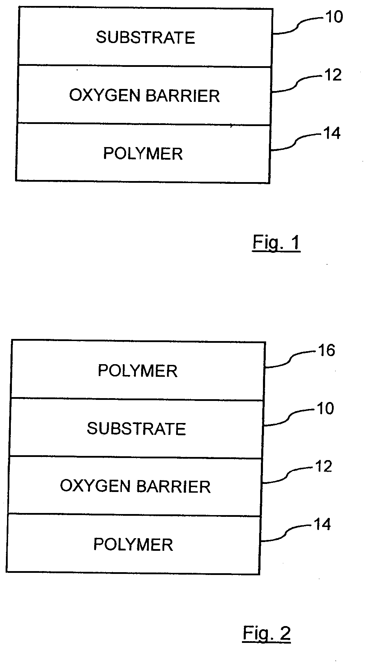

Figure 1 shows a laminate structure. The laminate structure comprises, from the outside to the inside, a substrate 10, an oxygen barrier layer 12 and a polymer layer 14. The substrate 10 is a paperboard substrate with a weight of 200 to 650 g/m². The oxygen barrier 12 comprises a blend of 70-90% by weight high-barrier resin and 10-30% by weight an aliphatic nylon. The polymer layer 14 comprises a blend of 50-89% by weight polyolefin, 10-50% by weight plastomer and 1-10% by weight anti-blocking agent. The laminate is created by extrusion coating the layers 12 and 14 onto the substrate 10. The laminate structure is suitable for use in manufacturing a liquid food package such as milk or fruit juice carton. The laminate structure can be cut and scored to form a container blank, which is then used in a form-fill-seal machine to produce the ultimate finished package.

The laminate structure has an oxygen barrier layer 12 which comprises a blend of a high-barrier resin and an aliphatic nylon (such as nylon 6) and this provides flex crack resistance and a reduced amount of micro-hole formation in the gas barrier layer upon subsequent heating compared to a resin without the additional aliphatic nylon. This increases the overall gas-barrier functionality of the laminate structure. The high-barrier resin could be a semicrystalline aromatic nylon such as MXD6. In this form, the modification of the gas barrier also results in a laminate structure that has improved processing properties. For example, when the oxygen barrier layer is being extruded, there is less surging in the extruder which is pumping the molten barrier resin. This improves the uniformity of the barrier layer thickness, in the machine direction. Therefore the finished laminate has more consistent gas barrier properties. An alternative high-barrier resin could be EVOH.

The polymer layer 14 comprises the innermost layer of the laminate structure, and as mentioned above comprises a blend of 50-89% by weight polyolefin, 10-50% by weight plastomer and 1-10% by weight anti-blocking agent. The polyolefin can comprise LDPE, HDPE or polypropylene. The anti-blocking agent can comprise calcium carbonate or a silicate. The polymer layer 14 acts as a sealing layer when the laminate is formed into a package and has improved seal strength, improved hot tack properties, a lower sealing initiation temperature, and a lower co-efficient of friction, when compared to a sealing layer that comprises a polyolefin only. The advantages listed above provide greater sealing reliability and there will be less leakage from the package. The plastomer in the polymer layer 14 provides the improved seal strength, the improved hot tack properties and the lower sealing initiation temperature and the anti-blocking agent is responsible for the lower co-efficient of friction. In a preferred embodiment, the anti-blocking agent comprises calcium carbonate. The use of calcium carbonate delivers better thermal conductivity of the polymer layer 14, resulting in the sealing layer 14 which flows into cavities during sealing. In additional, the presence of the calcium carbonate in the polymer layer 14 also assists with the provision of a lower co-efficient of friction for the polymer layer 14.

Figure 2 shows a second embodiment of the laminate structure, which further comprises an additional polymer layer 16, which comprising a blend of 50-89% by weight polyolefin, 10-50% by weight plastomer and 1-10% by weight anti-blocking agent, on the opposite side of the substrate 10 from the oxygen barrier layer 12. The additional polymer layer 16 comprises the outermost layer of the laminate structure. This additional polymer layer 16 also acts as a sealing layer when the laminate is formed into a package and has the same advantages in relation to the sealing process as does the polymer layer 14. When the laminate structure is folded to form the package, the polymer layer 14 will meet with the additional polymer layer 16 in the sealing process. In one version, the polymer layer 14 and the additional polymer layer 16 are substantially identical in composition. In a second version, the anti-blocking agent by weight % of the blend of the additional polymer layer 16 differs from the anti-blocking agent by weight % of the blend of the polymer layer 14. The difference in weight in the anti-blocking agent between the two polymer layers 14 and 16 allows for the adjustment of the co-efficient of friction properties of the inner and outermost surfaces of the laminate structure, in order to make selections to best suit the form-fill-seal machines.

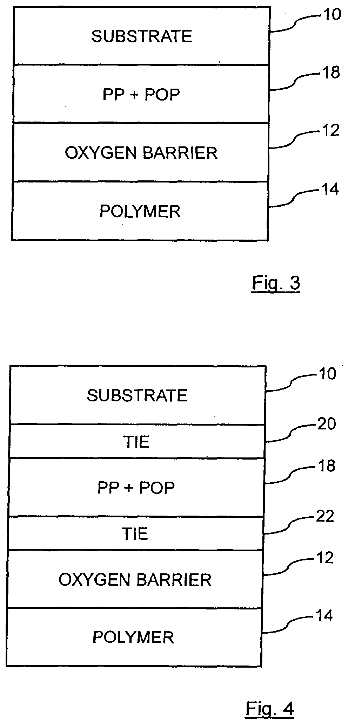

A third embodiment of the laminate structure is shown in Figure 3, The laminate structure comprises, from the outside to the inside, the substrate 10, a polypropylene layer 18, which comprises a blend of polypropylene and a plastomer, the oxygen barrier layer 12, and the polymer layer 14. As before, the oxygen barrier layer 12 comprises a blend of 70-90% by weight high-barrier resin and 10-30% by weight an aliphatic nylon and the polymer layer 14 comprises a blend of 50-89% by weight polyolefin, 10-50% by weight plastomer and 1-10% by weight anti-blocking agent. The polypropylene layer 18 is attached directly to the substrate 10. The polypropylene layer 18 comprises 60-90% by weight of polypropylene and comprises 10-40% by weight of plastomer.

The laminate structure of Figure 3 has a modified polypropylene layer 18 with a better flex crack resistance and pinhole resistance than a pure polypropylene layer. The adapted polypropylene layer 18 also has better adhesive properties for joining to the adjacent laminate layers. The addition of the plastomer to the polypropylene layer provides these advantages. The better flex crack resistance and pinhole resistance result in a lower effective water vapour transmission rate from the ultimate package. This results in less package bulging and less weight loss from the liquid food product within the package. The use of polypropylene in the laminate structure provides more structural integrity to the final package and this can be used to reduce the thickness of the substrate such as paperboard.

As mentioned above, the polypropylene layer 18 is attached directly to the substrate 10. Polypropylene has a relatively high melting point temperature, and this further enhances resistance against pinhole formation in the laminate structure. In filling and sealing systems that use gas burners to heat the laminate structure prior to sealing, this is particularly useful. The adhesion of the polypropylene layer 18 directly to the substrate 10 provides support for the polypropylene layer 18 and this discourages rupturing of the layer 18, so that during heating with a gas burner, any irregularly sized flames of the gas burner do not penetrate the polypropylene layer 18.

The polypropylene layer 18 comprises 60-90% by weight of polypropylene and 10-40% by weight of the plastomer. A plastomer is a polyeolefin with densities of between .865 g/cm³ and .905 g/cm³. Preferably, the plastomer is a C2-C8 metallocene catalysed LLDPE (linear low density polyethylene) co-polymer. In a further modification of the blend, it is possible for the polypropylene layer 18 to comprise a blend of polypropylene, a plastomer and LDPE. In this case, the polypropylene layer 18 comprises 10-40% by weight of LDPE. The total weight % of the modification provided by the plastomer and the LDPE should preferably not exceed 40% of the total weight % of the polypropylene layer 18. This addition of the LDPE to the polypropylene layer 18 provides a supporting function in the layer 18, and thereby enhancing the melt strength of the layer 18 and also further improves the flex crack resistance of the layer 18. A preferred structure of the polypropylene layer 18 comprises 70% by weight polypropylene, 10% by weight plastomer and 20% by weight LDPE.

As shown in Figure 4, the laminate structure can further comprise a tie layer 20 between the polypropylene layer 18 and the substrate 10 and a second tie layer 22 between the polypropylene layer 18 and the oxygen barrier layer 12. Each tie layer comprises an ethylene (meth)acrylic acid copolymer or other acid polymer. The use of the tie layer 20 provides better adhesion of the polypropylene layer 18 to the substrate 10. The additional tie layer 22 is preferably a blend of 10-45% by weight of a first polyolefin such as MAH grafted polyolefin (for example, MAH grafted LLDPE or MAH grafted LDPE), 10-45% by weight acid polymer such as ethylene (meth)acrylic acid copolymer, and 10-80% by weight of a second polyolefin such as LDPE. Such tie layer 22 provides better adhesion between the polypropylene layer 18 and the oxygen barrier layer 12, if joined directly together.

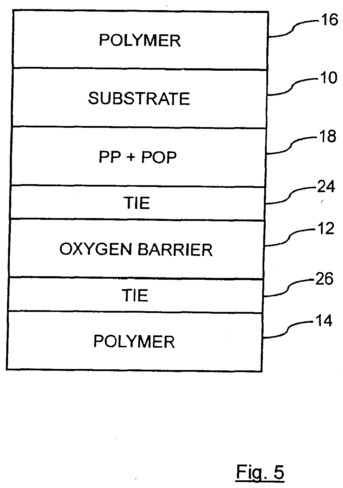

A yet further embodiment of the laminate structure is shown in Figure 5. In this embodiment, the structure from the outside to the inside comprises the polymer layer 16, the substrate 10, the polypropylene layer 18, which comprises a blend of polypropylene and a plastomer, a tie layer 24, the oxygen barrier layer 12, a tie layer 26 and the polymer layer 14. The oxygen barrier layer 12 comprises a blend of 70-90% by weight high-barrier resin and 10-30% by weight an aliphatic nylon. The polymer layer 14 and 16 comprise a blend of 50-89% by weight polyolefin, 10-50% by weight plastomer and 1-10% by weight anti-blocking agent. The tie layers 24 and 26 are, for example, ethylene-acrylic ester-maleic anhydride terpolymers, in which the acrylic ester can be ethyl acrylate, methyl acrylate or butyl acrylate. Alternatively, and for stronger bonding properties, the tie layer 24 could be the blend of 10-45% by weight MAH grafted polyolefin, 10-45% by weight ethylene (meth)acrylic acid copolymer or other acid polymer, and 10-80% by weight polyolefin, the same as the tie layer 22 of Figure 4, for the same reason of giving better adhesion between the polypropylene layer 18 and the oxygen barrier layer 12, if joined directly together.

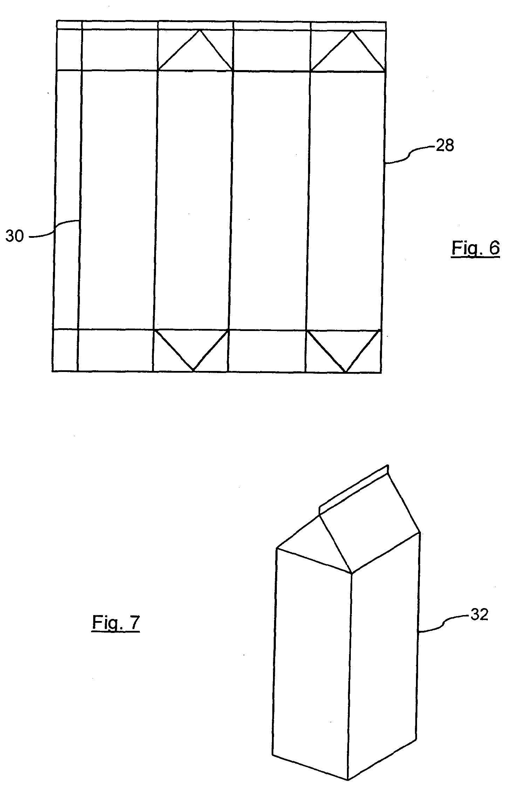

As discussed above, the laminate structures of the various embodiments are used in the manufacture of liquid food packages, also referred to as containers or cartons. Figure 6 shows a container blank 28 which is formed by cutting out the blank 28 from the laminate structure. The blank 28 is provided with lines of weakness 30, which are scorelines pressed into the blank 28 for the purpose of the defining folds in the blank. The blank 28 is then supplied to a form-fill-seal machine to make the final container 32, shown in Figure 7, which is a gable-topped carton. The blank 28 is first formed by side and bottom sealing the blank 28 to make a partially formed container which is open at the top. This partially formed container is then filled with the liquid food contents and top sealed to produce the finished container 32.

## Claims

1. A laminate structure comprising, from the outside to the inside,
a paperboard substrate with a weight of 200 to 650 g/m²,
an oxygen barrier layer, and
a polymer layer comprising a blend of 50-89% by weight polyolefin, 10- 50% by weight plastomer and 1 -10% by weight anti-blocking agent.

2. A laminate structure according to claim 1, wherein the polymer layer comprises the innermost layer of the laminate structure.

3. A laminate structure according to claim 1 or 2, and further comprising an additional polymer layer comprising a blend of 50-89% by weight polyolefin, 10-50% by weight plastomer and 1 -10% by weight anti- blocking agent, on the opposite side of the substrate from the oxygen barrier layer.

4. A laminate structure according to claim 3, wherein the additional polymer layer comprises the outermost layer of the laminate structure.

5. A laminate structure according to claim 3 or 4, wherein the polymer layer and the additional polymer layer are substantially identical in composition.

6. A laminate structure according to claim 3 or 4, wherein the anti-blocking agent by weight of the blend of the additional polymer layer is greater than the anti-blocking agent by weight of the blend of the polymer layer.

7. A laminate structure according to any preceding claim, wherein the anti-blocking agent comprises calcium carbonate or a silicate.

8. A laminate structure according to any preceding claim, wherein the polyolefin comprises LDPE, HDPE or polypropylene.

9. A container formed from a laminate structure according to any preceding claim.

## Patentansprüche

1. Laminatgebilde umfassend, von der Außenseite zur Innenseite,
ein Kartonsubstrat mit einem Gewicht von 200 bis 650 g/m²,
eine Sauerstoffbarriereschicht und
eine Polymerschicht umfassend eine Mischung von 50 - 89 Gew.-% Polyolefin, 10 - 50 Gew.-% Plastomer und 1 - 10 Gew.-% Antiblockmittel.

2. Laminatgebilde nach Anspruch 1, wobei die Polymerschicht die innerste Schicht des Laminatgebildes umfasst.

3. Laminatgebilde nach Anspruch 1 oder 2 und ferner eine zusätzliche Polymerschicht umfassend, die eine Mischung von 50 - 89 Gew.-% Polyolefin, 10 - 50 Gew.-% Plastomer und 1 - 10 Gew.-% Antiblockmittel auf der entgegengesetzten Seite des Substrats von der Sauerstoffbarriereschicht umfasst.

4. Laminatgebilde nach Anspruch 3, wobei die zusätzliche Polymerschicht die äußerste Schicht des Laminatgebildes umfasst.

5. Laminatgebilde nach Anspruch 3 oder 4, wobei die Polymerschicht und die zusätzliche Polymerschicht bezüglich der Zusammensetzung im Wesentlichen identisch sind.

6. Laminatgebilde nach Anspruch 3 oder 4, wobei das Antiblockmittel, auf das Gewicht der Mischung der zusätzlichen Polymerschicht bezogen, höher als das Antiblockmittel, auf das Gewicht der Mischung der Polymerschicht bezogen, ist.

7. Laminatgebilde nach einem vorhergehenden Anspruch, wobei das Antiblockmittel Calciumcarbonat oder ein Silicat umfasst.

8. Laminatgebilde nach einem vorhergehenden Anspruch, wobei das Polyolefin LDPE, HDPE oder Polypropylen umfasst.

9. Behälter, der aus einem Laminatgebilde nach einem vorhergehenden Anspruch gebildet ist.

## Revendications

1. Structure stratifiée comprenant, de l'extérieur vers l'intérieur,
un substrat en carton avec un poids compris entre 200 et 650 g/m²,
une couche de barrière à l'oxygène,
une couche de polymère comprenant un mélange uniforme compris entre 50 et 89 % en poids de polyoléfine, entre 10 et 50 % en poids de plastomère et entre 1 et 10 % en poids d'un agent anti-bloquant.

2. Structure stratifiée selon la revendication 1, dans laquelle la couche de polymère comprend la couche la plus interne de la structure stratifiée.

3. Structure stratifiée selon la revendication 1 ou la revendication 2, et comprenant en outre une couche de polymère supplémentaire comprenant un mélange uniforme compris entre 50 et 89 % en poids de polyoléfine, entre 10 et 50 % en poids de plastomère et entre 1 et 10 % en poids d'un agent anti-bloquant, sur le côté opposé du substrat à partir de la couche de barrière à l'oxygène.

4. Structure stratifiée selon la revendication 3, dans laquelle la couche de polymère supplémentaire comprend la couche la plus externe de la structure stratifiée.

5. Structure stratifiée selon la revendication 3 ou la revendication 4, dans laquelle la couche de polymère et la couche de polymère supplémentaire sont sensiblement identiques en composition.

6. Structure stratifiée selon la revendication 3 ou la revendication 4, dans laquelle l'agent anti-bloquant en poids du mélange uniforme de la couche de polymère supplémentaire est supérieur à l'agent anti-bloquant en poids du mélange uniforme de la couche de polymère.

7. Structure stratifiée selon l'une quelconque des revendications précédentes, dans laquelle l'agent anti-bloquant comprend du carbonate de calcium ou un silicate.

8. Structure stratifiée selon l'une quelconque des revendications précédentes, dans laquelle la polyoléfine comprend du LDPE, du HDPE ou du polypropylène.

9. Récipient formé à partir d'une structure stratifiée selon l'une quelconque des revendications précédentes.
